## Europäisches Patentamt

## European Patent Office

## Office européen des brevets

(11) Veröffentlichungsnummer: **0 139 816**
**B1**

(12) **EUROPÄISCHE PATENTSCHRIFT**

(45) Veröffentlichungstag der Patentschrift:
28.01.87

(51) Int. Cl.⁴: **G 06 F 15/40**

(21) Anmeldenummer: **84103494.5**

(22) Anmeldetag: **29.03.84**

(54) Verfahren und Anordnung zum Aufsuchen von einem vorgegebenen Suchargument entsprechenden Daten einer Datenfolge mit assoziativen Einrichtungen.

(30) Priorität: **23.09.83 DE 3334528**

(43) Veröffentlichungstag der Anmeldung:
**08.05.85 Patentblatt 85/19**

(45) Bekanntmachung des Hinweises auf die Patenterteilung:
**28.01.87 Patentblatt 87/5**

(84) Benannte Vertragsstaaten:
**AT BE CH DE FR GB IT LI NL SE**

(56) Entgegenhaltungen:
**EP - A - 0 054 588**
**DE - A - 2 525 287**
**DE - B - 2 548 501**

**IBM TECHNICAL DISCLOSURE BULLETIN, Band 17, Nr. 3, August 1974, Seiten 807-808, New York, USA; H.H. RUZICKA: "Parallel search of shift register storage"**
**PROCEEDINGS OF THE INTERNATIONAL CONFERENCE ON PARALLEL PROCESSING, Columbus, 25.-28. August 1981, Seiten 282-286, IEEE, New York, USA; F.J. BURKOWSKI: "Parallel hashing hardware for text scanning applications"**

(73) Patentinhaber: **Siemens Aktiengesellschaft Berlin und München, Wittelsbacherplatz 2, D-8000 München 2 (DE)**

(72) Erfinder: **Wolf, Gerhard, Dipl.-Ing., Chopinstrasse 5, D-8000 München 60 (DE)**

## Beschreibung

Die Erfindung betrifft ein Verfahren zum Aufsuchen von einem vorgegebenen Suchargument entsprechenden Daten gemäss dem Oberbegriff des Patentanspruches 1 sowie eine Anordnung zur Durchführung dieses Verfahrens.

Ein derartiges Verfahren ist im Prinzip beispielsweise aus der DE-AS 2 538 41, Spalte 2, Zeilen 50 bis 57, oder aus der DE-AS 2 548 501 bekannt. Jedoch sind diese Verfahren ohne weiteres nur auf Datenfolgen anwendbar, die die Arbeitsbreite des Assoziativspeichers nicht übersteigen. Häufig besteht aber die Forderung, in beliebig grossen Datenmengen bestimmte Teilmengen aufzusuchen.

Andererseits ist es bekannt, anstelle von Associativspeichern Hybrid-Assoziativspeicher für die Durchführung von assoziativen Funktionen zu verwenden, die aus einer assoziativen Oberfläche und einem normalen Zugriffsspeicher als Basisspeicher bestehen und daher vor allem die Möglichkeit zu einer kostengünstigen Speicherung von grossen Datenmengen bieten. Dabei spielt die Ausrichtung der Datenfolge in vertikaler oder horizontaler Richtung bezüglich der Leistungsfähigkeit des Hybrid-Assoziativspeichers eine entscheidende Rolle. Vorteilhafter ist allgemein die horizontale Ausrichtung der Datenfolge, doch führt hierbei die Speicherbreite zu einer Längenbegrenzung der Datenfolgen, wenn man nicht mehrere Speicherzeilen bei zusätzlichem Aufwand ketten will. Bei langen Datenfolgen erscheint daher trotz anderer Nachteile die vertikale Ausrichtung der Daten vorteilhafter. Neben der Speicherungsstruktur hat ausserdem das vorgesehene Suchverfahren entscheidenden Einfluss auf die Systemarchitektur des Hybrid-Assoziativspeichers — man siehe hierzu auch «Informatik-Fachberichte» von W. Brauer, Bd. 62 (1983), Seiten 68 bis 73.

Aufgabe der Erfindung ist es, ein geeignetes Suchverfahren anzugeben, das insbesondere für Hybrid-Assoziativspeicher geeignet ist und unter Ausnutzung der vorteilhafteren horizontal ausgerichteten Datenspeicherung das Durchsuchen beliebig langer Datenfolgen in einfacher Weise und damit beispielsweise ohne den Aufwand einer Mehrfachspeicherung wie bei der eingangs genannten DE-AS 2 538 401 ermöglicht.

Diese Aufgabe wird im Grundsätzlichen durch die kennzeichnenden Merkmale des Patentanspruches 1 gelöst.

Danach wird jede zu prüfende Datenfolge in der Arbeitsbreite der den Vergleich durchführenden Verknüpfungsanordnung und damit zweckmässig auch der Speicherbreite entsprechende Datenteilfolgen unterteilt, die nacheinander überprüft werden, wobei bei längeren Suchargumenten diese entsprechend unterteilt werden. Zu Beginn eines Suchvorganges wird nun das Suchargument oder dessen erster Teil wie bei den bekannten Verfahren zeichenweise gegenüber der zur Prüfung jeweils bereitstehenden Datenteilfolge verschoben, bis ein Treffer gefunden ist. Damit dabei bei voller Ausnutzung der Arbeitsbreite der Verknüpfungsanordnung bei verschobenem Suchargument der am Ende herausfallende Teil des zur Prüfung anstehenden Suchargumentes fortlaufend in die Prüfung mit eingezogen und damit der Suchvorgang beschleunigt werden kann, erfolgt die Verschiebung zyklisch, und die aus der Prüfung bereits ausgeschiedenen Zeichen der Datenfolge werden durch nachfolgende Datenzeichen der Datenfolge ersetzt.

Zu diesem Zweck werden daher die einzelnen Datenteilfolgen der assoziativen Verknüpfungsanordnung über einen zweistufigen Pufferspeicher zugeführt, bei dem freie Speicherabschnitte der ersten Stufe selbsttätig durch Datenzeichen aus der zweiten Stufe belegt werden. Dadurch wird die Kettung für das infolge der Verschiebung über das Zeilenende hinausgehende Suchargumentteil gleichzeitig auch die für die nachgezogenen Datenzeichen automatisch aufrechterhalten.

Erst wenn nach Einleiten eines Suchvorganges und ggf. erfolgter Verschiebung des Suchargumentes ein Treffer erzielt ist, werden in laufender Folge die einzelnen Suchargumentteile und die einzelnen Datenteilfolgen bei jedem weiteren Prüfschritt ausgetauscht, wobei die beim ersten Treffer erzielte Verschiebung für die nachfolgenden Suchargumentteile aufrechterhalten bleibt, damit keine Lücken gegenüber den Datenteilfolgen entstehen, und wobei der Nachziehmechanismus des Pufferspeichers die entsprechende Datenzeichenkettung sichert.

Gemäss der Erfindung gliedert sich also das neue Suchverfahren in zwei Abschnitte, nämlich in das schrittweise Verschieben des Suchargumentes entlang der Datenfolge während einer ersten Suchphase bis zum Auffinden des Startpunktes für die weitere Suche und in zweite und ggf. folgende Suchphasen mit jeweils gleichzeitigem Austausch von Suchargumentteil und Datenteilfolge für jede weitere Prüfung, wobei nach jeder erfolglos abgebrochenen zweiten oder folgenden Suchphase auf die erste Suchphase zurückgeschaltet wird und die Verschiebung des ersten Suchargumentteiles aus der erreichten Verschiebestellung heraus mit der massgebenden Datenteilfolge fortgesetzt wird, bis ein neuer Treffer erzielt ist und wieder auf die zweite Suchphase umgeschaltet werden kann.

Die Leistung dieses neuen Suchverfahrens kann darüber hinaus gemäss der Weiterbildung nach Patentanspruch 2 erheblich gesteigert werden, wenn mehrere Datenteilfolgen gleichzeitig in einheitlicher Weise überprüft werden, wobei in vorteilhafter Weise ein Suchvorgang nach Überleitung in die zweite Suchphase nur dann abgebrochen zu werden braucht, wenn für keine der überprüften Datenteilfolgen ein verwertbarer Treffer mehr erzielt wird.

Davon ausgehend können auch Kettungen von parallel überprüften Subdatenfolgen einer Datenfolge über mehrere Subdatenfolgen hinweg entsprechend Patentanspruch 3 in einfacher Weise bewältigt werden.

Die weiteren Patentansprüche 4 bis 8 beziehen sich dagegen auf Anordnungen zur Durchführung der erfindungsgemässen Verfahren.

Nachfolgend sei die Erfindung anhand von in der Zeichnung dargestellten Ausführungsbeispielen näher erläutert. Im einzelnen zeigen

Fig. 1A und 1B zwei Prinzipdarstellungen zur Erläuterung des Verfahrens gemäss der Erfindung,

Fig. 2 den prinzipiellen Aufbau einer Anordnung zur Durchführung des Verfahrens gemäss der Erfindung,

Fig. 3 ein Prinzipschaltbild für den in der Anordnung von Fig. 2 benötigten zweistufigen Pufferspeicher,

Fig. 4 ein Prinzipschaltbild für den in der Anordnung von Fig. 2 benötigten Zeichenumordner zur Aufrechterhaltung der zyklischen Verschiebung für die Folgesuchargumentteile,

Fig. 5 den prinzipiellen Aufbau eines Hybrid-Assoziativspeichers mit den für die Ausführung der Suchverfahren gemäss der Erfindung benötigten Ergänzungen in Anlehnung an die Anordnung von Fig. 2,

Fig. 6 eine Prinzipdarstellung zur Erläuterung der Kettung von Subdatenfolgen,

Fig. 7 ein Prinzipschaltbild für einen Teil der Trefferauswertesteuerung von Fig. 5 zur Beeinflussung der Trefferauswertung und zur Durchführung der Trefferkettung von geketteten Subdatenfolgen und

Fig. 8A und 8B ein Flussdiagramm zur Erläuterung der Arbeitsweise der Anordnung von Fig. 2 und Fig. 5.

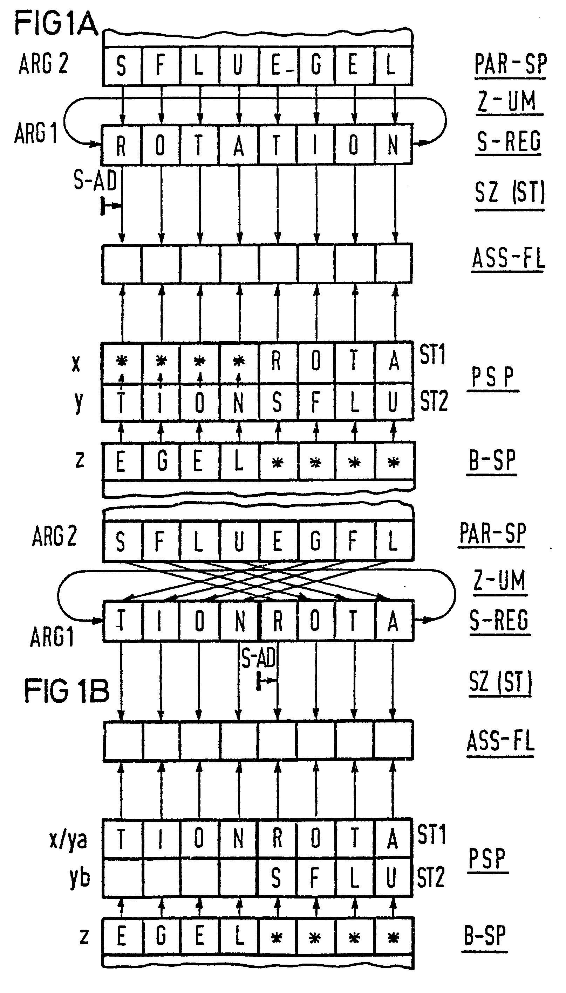

Fig. 1A und Fig. 1B zeigen in gleichartiger Darstellung eine assoziative Verknüpfungsanordnung ASS-FL, der über ein Schiebegerister S-REG von oben der jeweils massgebende Suchargumentteil, z.B. ARG1, und von unten über einen zweistufigen Pufferspeicher PSP die jeweils massgebende Datenteilfolge zugeleitet wird. Die jeweils massgebenden Suchargumentteile werden dem Schieberegister S-REG über einen Zeichenumordner Z-UM aus einem Parameterspeicher PAR-SP und die jeweils massgebenden Datenteilfolgen dem Pufferspeicher PSP aus einem Basisspeicher B-SP zugeführt.

Im vorliegenden Falle besteht das Suchargument beispielsweise aus dem Wort «ROTATIONSFLÜGEL», das — wie gezeigt — in zwei Suchargumentteile ARG1 und ARG2 entsprechend der Arbeitsbreite der assoziativen Verknüpfungsanordnung ASS-FL unterteilt ist, wobei der erste Suchargumentteil ARG1 bereits an das Schieberegister S-REG übergeben ist und der zweite Suchargumentteil ARG2 noch im Parameterspeicher PAR-SP gespeichert ist.

In der zu überprüfenden Datenfolge ist dasselbe Wort «ROTATIONSFLÜGEL» gemäss Fig. 1A auf drei Datenteilfolgen x, y und z aufgeteilt, von denen die ersten beiden x und y bereits in den Pufferspeicher PSP geladen sind und die dritte Datenfolge z noch im Basisspeicher B-SP steht.

Fig. 1A zeigt dabei den Ausgangszustand zu Beginn eines Suchvorganges, und der Schiebezeiger SZ der zugehörigen Steuerung ST zeigt mit seiner Adresse S-AD noch auf die Grundstellung «0» des Schieberegisters S-REG. Die erste Prüfung durch die assoziative Verknüpfungsanordnung ASS-FL ergibt daher keinen Treffer.

Das Schieberegister S-REG verschiebt daher den gespeicherten Suchargumentteil ARG1 zyklisch um einen Schritt, und gleichzeitig wird im Pufferspeicher PSP in der Datenteilfolge x das erste Datenzeichen durch das aus der zweiten Stufe ersetzt, was durch einen Pfeil angedeutet ist. Anschliessend führt die assoziative Verknüpfungsanordnung ASS-FL einen weiteren Prüfschritt aus, der wiederum keinen Treffer ergibt.

Dieses Spiel wird nun so lange fortgesetzt, bis nach vier Verschiebeschritten im vorliegenden Fall für den gesamten ersten Suchargumentteil ARG1 eine Übereinstimmung gegeben ist und ein Treffer erzielt wird. Dieser Zustand ist in Fig. 1B dargestellt und zeigt, dass die zweite Stufe des Pufferspeichers durch das schrittweise Nachziehen der einzelnen Datenzeichen zur Hälfte geleert ist. Beim darauffolgenden Nachladen der Datenteilfolge z aus dem Basisspeicher B-SP wird daher die erste Hälfte der Datenteilfolge z unmittelbar in die ersten Stufe ST1 des Pufferspeichers PSP nachgezogen, und zwar zusammen mit der zweiten Hälfte yb der Datenteilfolge y, während die zweite Hälfte der Datenteilfolge z zunächst in der zweiten Stufe ST2 des Pufferspeichers gespeichert wird.

Die erfolgte Verschiebung des Suchargumentes wird also durch den Nachzieheffekt des Pufferspeichers PSP zwangsläufig aufrechterhalten und damit die nahtlose Kettung der Zeichenfolgen sichergestellt. Für die nachfolgenden Suchargumentteile, also z.B. ARG2, besorgt dies der Zeichenumordner Z-UM, der anhand der Schiebeadresse S-AD eingestellt wird, so dass — wie durch die Pfeile angedeutet ist — die Einordnung in das Schieberegister S-REG entsprechend der erreichten Verschiebung erfolgt. Ausgehend von Fig. 1B würde also die weitere Prüfung nach dem Nachladen des zweiten Suchargumentteiles ARG2 in das Schieberegister S-REG und der dritten Datenteilfolge z in den Pufferspeicher PSP ebenfalls einen Treffer ergeben, so dass — da das Suchargument abgearbeitet ist — der Suchvorgang erfolgreich abgebrochen werden kann.

Aus dem vorangehenden dürfte klargeworden sein, dass bei dem neuen Suchverfahren keine Beschränkung in der Länge des Suchargumentes gegeben ist und die notwendige Kettung ohne grossen Aufwand auch mit einem Hybrid-Assoziativspeicher durchgeführt werden kann.

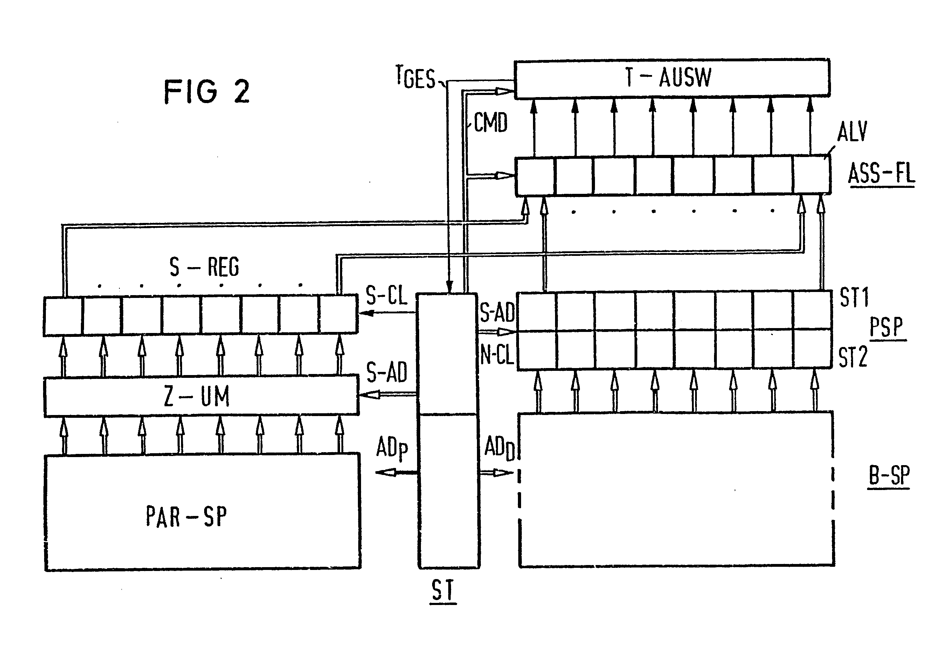

Fig. 2 zeigt eine entsprechende Anordnung zur Durchführung des Verfahrens gemäss der Erfindung unter Zugrundelegung eines Hybrid-Assoziativspeichers, wie er dem Prinzip nach beispielsweise aus der DE-AS 2 525 287 bekannt ist. Ein solcher Hybrid-Assoziativspeicher besteht aus einem normalen Zugriffsspeicher als Basisspeicher B-SP, der die einzelnen Datenteilfolgen zeilenweise untereinander gespeichert enthält. Die gewünschten Assoziationsfunktionen werden von der assoziativen Oberfläche ASS-FL ausgeführt, mit der in an sich bekannter Weise eine Trefferauswertesteuerung T-AUSW gekoppelt ist. Die assoziative Oberfläche ASS-FL ist jedoch im vorliegenden Falle aus einer Reihe von Verknüpfungseinheiten zusammengesetzt, von denen jede jeweils die z.B. acht Bit eines jeden Datenzeichens parallel überprüft und das Ergebnis auf einer einzelnen Trefferleitung der Trefferauswertesteuerung T-AUSW mitteilt. Diese Verknüpfungseinheiten können in vorteilhafter Weise entsprechend der älteren europäischen Patentanmeldung EP-A-0 126 896 (DE-A-3 319 581) ausgebildet sein.

Gemäss der Erfindung ist zwischen dem Basisspeicher B-SP und der assoziativen Oberfläche ASS-FL ein zweistufiger Pufferspeicher PSP vorgesehen, über den die Datenteilfolgen aus dem Basisspeicher B-SP der assoziativen Oberfläche ASS-FL zugeleitet werden. Ausserdem ist zusätzlich ein Schieberegister S-REG vorgesehen, dessen Parallelausgänge das jeweilige Suchargument für die assoziative Oberfläche ASS-FL liefern und dem die Suchargumente bzw. Suchargumentteile aus dem Parameterspeicher PAR-SP über einen Zeichenumordner Z-UM zugeführt werden. Die Arbeitsweise der genannten Bauteile wird dabei durch eine gemeinsame Steuereinrichtung ST bestimmt und gesteuert, indem die benötigten Steuerbefehle und -adressen zeitgerecht bereitgestellt werden, wobei der Arbeitsablauf teilweise durch die Trefferaussage $T_{GES}$ der Trefferauswertesteuerung T-AUSW beeinflussbar ist. Es sind dies u.a. die Adressen $AD_D$ bzw. $AD_P$ für den Basisspeicher B-SP bzw. für den Parameterspeicher PAR-SP, der Schiebetakt S-CL für das Schieberegister S-REG, die davon abgeleitete Adresse S-AD zur entsprechenden Einstellung des Zeichenumordners Z-UM für die zyklisch verschobene Übergabe der aus dem Parameterspeicher PAR-SP gelesenen Suchargumente bzw. -teile an das Schieberegister S-REG und für die Steuerung des Nachziehens von Datenzeichen aus der zweiten Stufe ST2 in die erste Stufe ST1 des Parameterspeichers PSP in Verbindung mit Nachziehtakten N-CL sowie die allgemeinen Steuerbefehle CMD für die Verknüpfungseinrichtungen der assoziativen Oberfläche ASS-FL sowie für die Trefferauswertesteuerung T-AUSW.

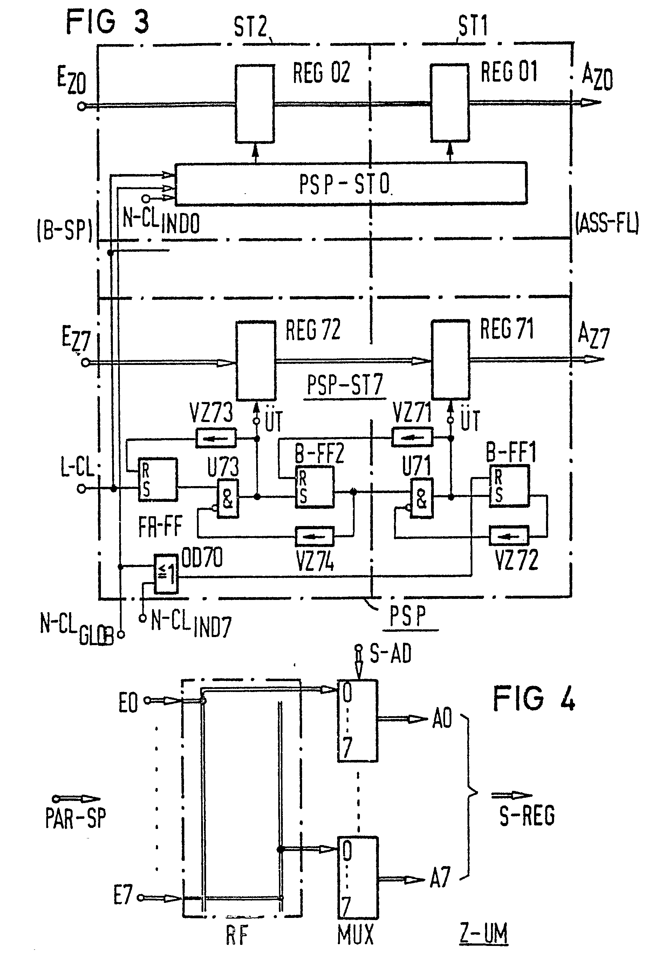

Der mögliche Aufbau des Pufferspeichers PSP ist in Fig. 3 dargestellt. In jeder der beiden Stufen ST1 und ST2 ist für jedes Datenzeichen einer Datenteilfolge einer Speichereinheit, z.B. in Form von Registern REG01 bis REG71 in der Stufe ST1 und REG02 bis REG72 in der Stufe ST2, vorgesehen, die je Datenzeichenweg, z.B. vom Eingang $E_{Z0}$ zum Ausgang $A_{Z0}$ für das Datenzeichen Z0, in Reihe geschaltet sind und jeweils durch eine gemeinsame Steuerung, z.B. PSP-ST0, gesteuert werden. Für den Zeichenweg $E_{Z7}/A_{Z7}$ ist der Aufbau der zugehörigen Steuerung PSP-ST7 ausführlicher dargestellt. Danach ist jedem Register REG71 bzw. REG72 eine bistabile Kippstufe B-FF1 bzw. B-FF2 zugeordnet, die anzeigt, ob das zugehörige Register mit gültigen Datenzeichen belegt ist oder nicht. Diese Kippstufen bilden zusammen mit vorgeschalteten UND-Gliedern U71 bzw. U73 eine Reihenschaltung, die durch ein vorgeschaltetes Fangflipflop FA-FF beispielsweise mit dem Lesetakt L-CL des Basisspeichers B-SP angesteuert wird. Ist keine der Kippstufen gesetzt, so wird nach dem Setzen des Fangflipflops FA-FF durch einen Lesetakt L-CL zunächst über das UND-Glied U73 die Kippstufe B-FF2 gesetzt und gleichzeitig ein Übernahmetakt ÜT für das Register REG72 ausgelöst, der über das Verzögerungsglied VZ73 auch das Fangflipflop FA-FF wieder zurücksetzt.

Mit Setzen der Kippstufe B-FF2 wird weiterhin das vorgeschaltete UND-Glied U73 gesperrt und über das UND-Glied U71 die nachfolgende Kippstufe B-FF1 gesetzt, wobei gleichzeitig ebenfalls ein Übernahmetakt ÜT, diesesmal für das Register REG71, ausgelöst und die Kippstufe B-FF2 über das Verzögerungsglied VZ71 zurückgesetzt wird. Ausserdem sperrt die gesetzte Kippstufe B-FF1 das vorgeschaltete UND-Glied U71.

Ein am Ausgang $E_{Z7}$ mit einem Lesetakt L-CL angebotenes Datenzeichen wird also zunächst in das Register REG72 und, falls das Register REG71 frei ist, von dort selbsttätig in dieses übernommen, so dass es am Ausgang $A_{Z7}$ für die weitere Auswertung durch die angeschlossene assoziative Oberfläche ASS-FL zur Verfügung steht. Dabei kann ein im Register REG71 enthaltenes Datenzeichen in einfacher Weise durch ein nachfolgendes aus dem Register REG72 ersetzt werden, wenn die Kippstufe B-FF1 zurückgesetzt wird. Dieses Rücksetzen kann für alle Register REG01 bis REG71 der Stufe ST1 des Pufferspeichers PSP gleichzeitig mit dem globalen Nachziehtakt $N\text{-}CL_{GLOB}$ über das ODER-Glied OD70 beim Nachladen einer neuen Datenteilfolge aus dem Basisspeicher B-SP oder aber auch für jedes Register einzeln mit dem individuellen Nachziehtakt, z.B. $N\text{-}CL_{IND7}$, erfolgen, wenn infolge der Verschiebung des Suchargumentes im Schieberegister S-REG das entsprechende Datenzeichen in der Stufe ST1 des Pufferspeichers auszutauschen ist.

Der Aufbau des für das Nachladen des Schieberegisters S-REG mit einem Folgesuchargumentteil nach eingetretener zyklischer Verschiebung benötigte Zeichenumordners Z-UM ist in Fig. 4 gezeigt. Dieser Umordner besteht aus einem Rangierfeld RF und z.B. je einem Multiplexer MUX je Zeichen mit z.B. acht Zeicheneingängen, von denen jeder abhängig von der Schiebeadresse S-AD mit dem Ausgang, z.B. A0, verbunden werden kann. Jeder dieser Zeicheneingänge 0 bis 7 jedes Multiplexers MUX ist über das Rangierfeld RF mit je einer der vorhandenen Zeichenleitungen E0 bis E7 des Parameterspeichers PAR-SP in der Weise verbunden, dass die Zeichenleitungen E0 bis E7 entsprechend der folgenden Zuordnungstabelle, abhängig von der jeweiligen Schiebeadresse S-AD als Einstelladresse, zu den Ausgängen AD bis A7 durchgeschaltet werden:

| S-AD = | 0 | 1 | 2 | 3 | 4 | 5 | 6 | 7 |
|---|---|---|---|---|---|---|---|---|
| E0 | A0 | A1 | A2 | A3 | A4 | A5 | A6 | A7 |
| E1 | A1 | A2 | A3 | A4 | A5 | A6 | A7 | A0 |
| E2 | A2 | A3 | A4 | A5 | A6 | A7 | A0 | A1 |
| D3 | A3 | A4 | A5 | A6 | A7 | A0 | A1 | A2 |
| E4 | A4 | A5 | A6 | A7 | A0 | A1 | A2 | A3 |
| E5 | A5 | A6 | A7 | A0 | A1 | A2 | A3 | A4 |
| E6 | A6 | A7 | A0 | A1 | A2 | A3 | A4 | A5 |
| E7 | A7 | A0 | A1 | A2 | A3 | A4 | A5 | A6 |

Bei der Einstelladresse «0» werden also die acht Argumentzeichen auf den Zeichenleitungen E0 bis E7 ohne Umordnung direkt zu den gleichnamigen Ausgängen A0 bis A7 weitergeleitet, während sie bei schrittweise erhöhter Einstelladresse zyklisch entsprechend versetzt an den Ausgängen auftreten.

Durch die zyklische Verschiebung des Suchargumentes im Schieberegister S-REG und durch den entsprechenden Datenzeichenaustausch im Pufferspeicher PSP ist bei jeder Prüfung durch die assoziative Oberfläche ASS-FL diese in voller Arbeitsbreite tätig. Die Trefferauswertesteuerung T-AUSW braucht daher lediglich zu überprüfen, ob jede Verknüpfungseinheit der ALV der assoziativen Oberfläche ASS-FL einen Treffer anzeigt oder nicht, was in einfacher Weise mit einem UND-Glied überprüft werden kann.

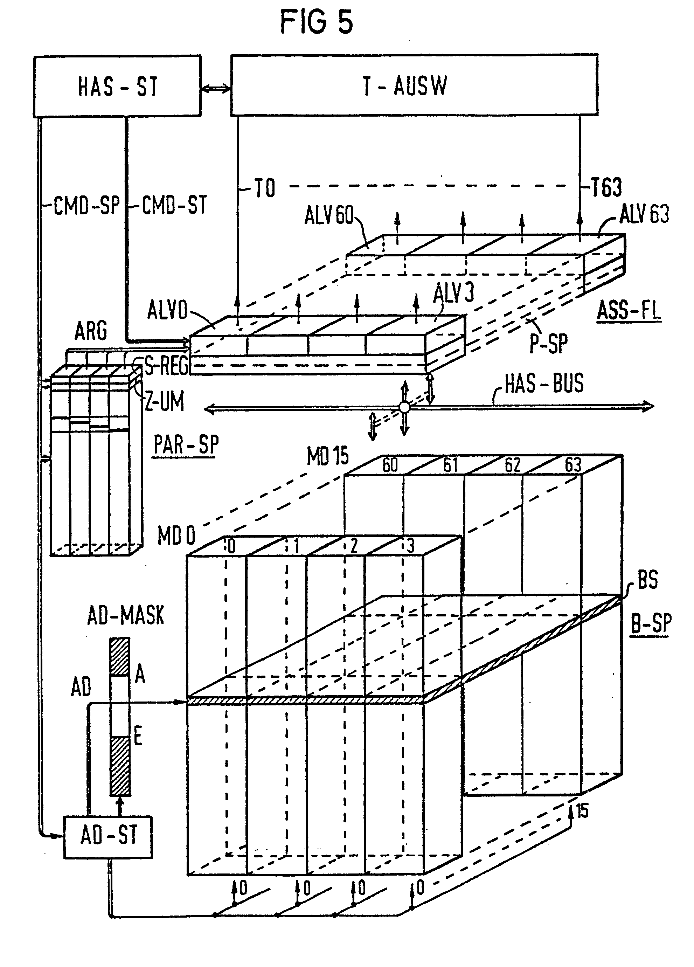

Fig. 5 zeigt in Anlehnung an die Anordnung von Fig. 2 einen Hybrid-Assoziativspeicher, dessen Basisspeicher aus mehreren Speichergruppen, z.B. 16 Speichergruppen MD0 bis MD15, zusammengesetzt ist, von denen jede, z.B. MD0, mit jeweils aus mehreren Zeichen oder Byte bestehenden Dateneinheiten — der Einfachheit halber sind nur vier Zeichen vorgesehen — zeilenweise zum Ein- oder Ausspeichern über das Datenleitungssystem HAS-BUS ansteuerbar ist, so dass Dateneinheiten in direktem Zugriff gleichfalls zeilenweise wie bei einem herkömmlichen Speicher wahlweise in eine der Speichergruppen ein- und ausgespeichert werden können. Andererseits können die einander korrespondierenden Zeilen in den einzelnen Speichergruppen gleichzeitig angesteuert und somit die darin enthaltenen Dateneinheiten gleichzeitig zur assoziativen Oberfläche ASS-FL weitergeleitet oder übernommen werden. Entsprechend ist die assoziative Oberfläche ASS-FL vergrössert und weist je Speichergruppe eine Reihe von im vorliegenden Falle vier Verknüpfungseinheiten ALV auf, also insgesamt die Verknüpfungseinheiten ALV0 bis ALV63, so dass $4 \times 16 = 64$ Datenzeichen gleichzeitig vom Basisspeicher B-SP zur Verfügung gestellt und geprüft werden können.

Damit eröffnet ein solcher dreidimensionaler Basisspeicher verschiedene Möglichkeiten der Einordnung von aus vielen Dateneineiten zusammengesetzten Dateien in den Basisspeicher B-SP, nämlich die Bildung einer Datei durch eine Speichergruppe als Speichersäule, so dass 16 Dateien gleichzeitig überprüft werden können, oder aber die Verteilung einer Datei auf die parallelen Speichergruppen mit oder ohne Serieschaltung der Speichersäulen im Bereich des ganzen oder nur eines Teiles des Basisspeichers B-SP, so dass Teile der Datei parallel und damit die Daten also solche schneller überprüft werden können. Die Beschränkung auf vorgegebene Ebenen des Basisspeichers B-SP kann dabei durch eine vorgegebene Adressenmaske AD-MASK für die Ansteueradressen AD gesteuert werden, die z.B. durch die Anfangs- und Endadresse A/E des jeweiligen Dateibereiches über die Adressensteuerung AD-ST anhand von Steuerbefehlen CMD-SP der übergeordneten Steuerung HAS-ST des Hybrid-Assoziativspeichers eingestellt wird.

Für den die Suchargumente ARG liefernden Parameterspeicher PAR-SP wird dagegen auch in diesem Falle nur eine Speichergruppe benötigt, da die den einzelnen Speichergruppen, z.B. MD0, des Basisspeichers B-SP zugehörigen Verknüpfungseinheiten, z.B. ALV0 bis ALV3, jeweils mit demselben Argument ARG beaufschlagt werden. Analoges gilt für die übrigen Parameter, die für die Verknüpfungseinheiten ALV der assoziativen Oberfläche ASS-FL benötigt werden. Diese werden zweckmässig ebenfalls im Parameterspeicher PAR-SP gespeichert und zusammen mit den Suchargumenten ARG gelesen, aber nicht über den Zeichenumordner Z-UM und das Schieberegister S-REG, sondern den Verknüpfungseinheiten ALV direkt zugeführt, was jedoch nicht näher gezeigt ist.

Die übergeordnete Steuerung HAS-ST, die insbesondere — etwa wie bei der DE-OS 3 216 905 (Fig. 3) — als Mikroprozessor ausgebildet sein kann, steuert in an sich bekannter Weise den Zugriff zu den einzelnen Speichern sowie den gesamten Arbeitsablauf des Hybrid-Assoziativspeichers anhand von aussen zugeführter Befehle zur Durchführung vorgegebener Aufgaben, die dann vom Hybrid-Assoziativspeicher autonom ausgeführt werden.

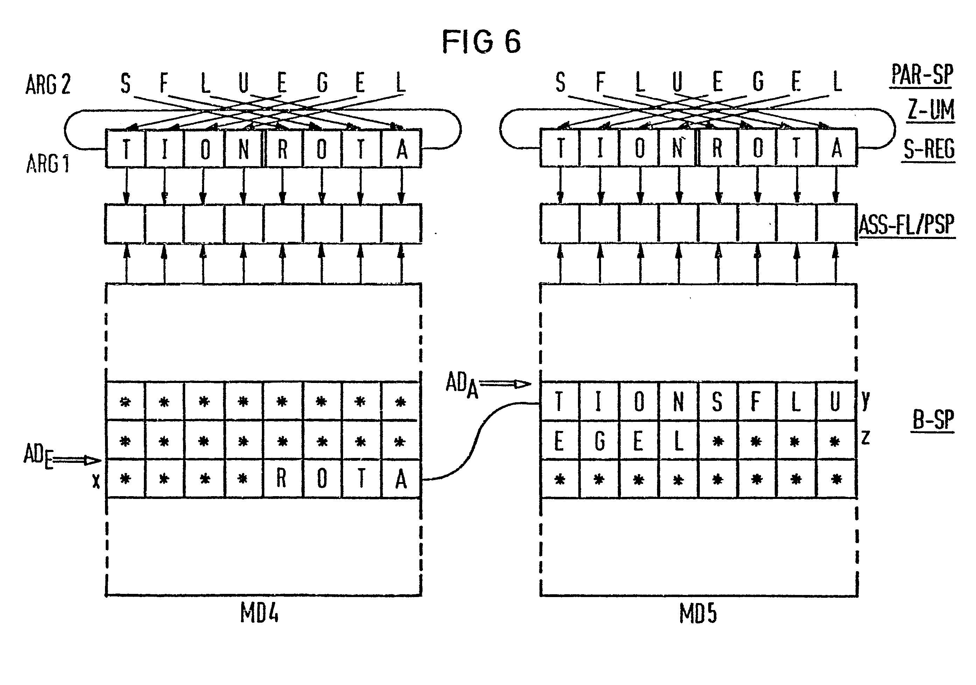

Eine dieser möglichen Aufgaben besteht im Aufsuchen von Daten anhand eines vorgegebenen Suchargumentes aus den im Basisspeicher B-SP abgespeicherten Daten, wobei eine gesuchte Datenmenge auch auf zwei oder mehrere miteinander gekettete Subdatenfolgen verteilt sein kann, wie z.B. Fig. 6 für die Speichergruppen MD4 und MD5 des Basisspeichers zeigt.

Gesucht wird wie beim Beispiel nach Fig. 1A das Wort «ROTATIONSFLÜGEL», das in gleicher Weise auf drei Datenteilfolgen x, y und z verteilt ist, allerdings mit dem Unterschied, dass die Datenteilfolge x in der letzten Zeile des gültigen Datenbereiches in der Speichergruppe MD4 und die beiden nachfolgenden Datenteilfolgen y und z in den ersten beiden Zeilen des gültigen Datenbereiches in der Speichergruppe MD5 gespeichert sind.

Beim Überprüfen der letzten durch die Endadresse $AD_E$ des gültigen Dateibereiches gekennzeichneten Zeilen aller Speichergruppen des Basisspeichers wird demzufolge nach dem vierten Verschiebeschritt für das Schieberegister S-REG ein erster Treffer erzielt. Voraussetzung dafür ist jedoch, dass mit Erreichen der Endadresse $AD_E$ für die Suchdatenfolge die durch die Verschiebung des Argumentes ARG aus der Prüfung herausgefallenen Datenzeichen, also die ersten vier Datenzeichen der Datenteilfolge x, bei der Trefferauswertung in der Trefferauswertesteuerung T-AUSW nicht berücksichtigt werden, da für den das Zeilenende überschreitenden Rest des Suchargumentteiles ARG1, nämlich die Zeichenfolge «TION», keine gültigen Datenzeichen als Vergleichszeichen bereitgestellt werden können. Diese befinden sich vielmehr in der anderen Speichergruppe MD5.

Ebenso muss nach der Umsteuerung auf die Anfangsadresse $AD_A$ des gültigen Dateibereiches bei Überprüfung der Datenteilfolge y zunächst die bereits überprüfte Zeichenfolge «ROTA» des Suchargumentteiles ARG1 von der Prüfung ausgeschlossen werden, da nur vollständige Suchargumentteile im Schieberegister ausgetauscht werden können. Erst wenn auch die Prüfung für den Restteil des Suchargumentteiles ARG1 erfolgreich verlaufen ist, kann auf die zweite Suchphase umgeschaltet werden und durch gleichzeitigen Austausch von Datenteilfolge und Suchargumentteil — wie bereits beschrieben — der Suchvorgang fortgesetzt werden.

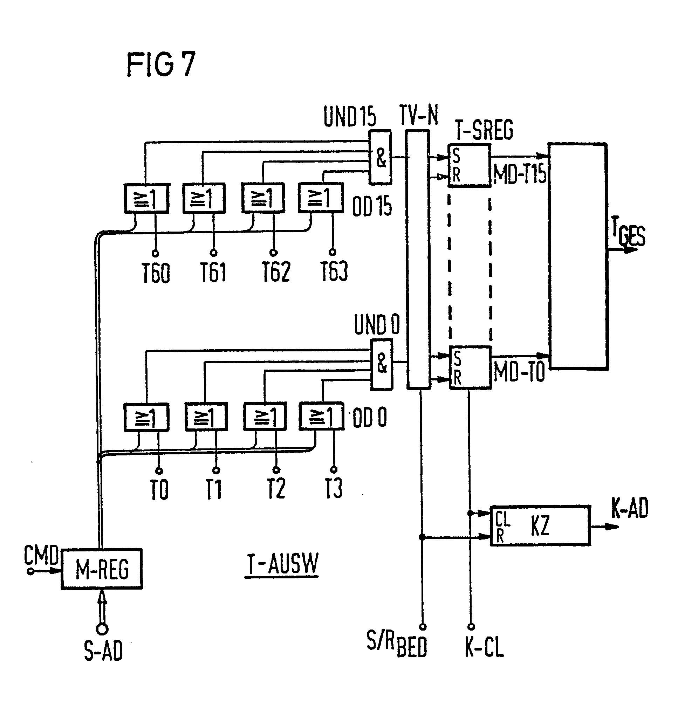

Bei Erreichen einer Dateigrenze sind also die durch die Verschiebung des Suchargumentteiles im Schieberegister S-REG entstandenen Teilfolgen des Suchargumentteiles in zwei getrennten Schritten zu prüfen, als wäre der überhängende Teil nicht verfügbar. Das erfordert entsprechende Abweichungen vom üblichen Verfahrensablauf, die aber ohne Schwierigkeiten in die Ablaufsteuerung integrierbar sind. Ausgangspunkt für die entsprechenden zusätzlichen Steuerbefehle der Steuerung HAS-ST ist das Erreichen der vorgegebenen Dateibereichsgrenze im Basisspeicher B-SP, was anhand der vorgegebenen Endadresse $AD_E$ leicht überwacht werden kann. Dabei können diese zusätzlichen Steuerbefehle in einfacher Weise durch die Trefferauswertesteuerung T-AUSW unterstützt werden, wenn diese — wie Fig. 7 zeigt — in entsprechender Weise ergänzt wird. Je zu überprüfender Trefferleitung T0 bis T63 entsprechend der Anzahl der Verknüpfungseinheiten ALV in der assoziativen Oberfläche ASS-FL ist ein gesondertes ODER-Glied vorgesehen, und diese ODER-Glieder sind entsprechend den verschiedenen Speichergruppen des Basisspeichers B-SP in Gruppen OD0 bis OD15 zusammengefasst, wobei die Ausgänge der ODER-Glieder gruppenweise auf ein UND-Glied UND0 bis UND15 einwirken, so dass in der Regel nur bei Signalisierung eines Treffers auf allen eine Gruppe bildenden Trefferleitungen, z.B. T0 bis T3, ein Treffersignal zur Auswertung gelangt.

Über die zweiten Signaleingänge der einzelnen ODER-Glieder ist es möglich, einen solchen Zeichentreffer auf den einzelnen Trefferleitungen nachzubilden, wenn das zugehörige Zeichen von der Prüfung ausgenommen werden soll, wie es beispielsweise in der vorangehend beschriebenen Weise bei einer auf zwei Subdatenfolgen aufgeteilten gesuchten Datenmenge erforderlich ist. Diese Pseudotreffer werden durch ein gleich einem Maskenregister arbeitendes Register M-REG signalisiert, dessen einzelne Markierstufen z.B. abhängig von der fortschreitenden Schiebeadresse S-AD nacheinander gesetzt werden und parallel die in den einzelnen Gruppen entsprechenden ODER-Glieder ansteuern.

Dabei sind die Ausgangssignale der einzelnen Markierstufen invertierbar und wahlweise die nicht invertierten oder aber die invertierten Signale wirksam schaltbar, je nachdem, ob bei der Prüfung der letzten Zeile eines Dateibereiches infolge Verschiebung Datenzeichen von der Prüfung auszuschliessen sind oder aber bei der Prüfung der nachfolgenden ersten Zeilen des Dateibereiches die bereits überprüften Datenzeichen des unveränderten Suchargumentteiles nicht mehr geprüft werden dürfen.

Auch ist für die Trefferkettung am Ende einer Subdatenfolge für jede Speichergruppe MD0 bis MD15 eine bistabile Trefferkippstufe vorgesehen, die zusammen ein Schieberegister T-SREG bilden, so dass durch Verschieben der Trefferinhalte diese mit Trefferaussagen nachfolgender Subdatenfolgen gekettet werden können. Die Verschiebung erfolgt durch den Kettungstakt K-CL, der gleichzeitig einen Kettungszähler K-Z fortschaltet, so dass anhand der Kettungsadresse K-AD ermittelt werden kann, in welchem Speichermodul bzw. Speichergruppe die gesuchte und gefundene Datenmenge ihren Anfang hat.

Den Kettungskippstufen des Trefferschieberegisters T-SREG ist zweckmässig ein Verknüpfungsnetzwerk TV-N vorgeschaltet, über das die einzelnen Kippstufen bedingt oder unbedingt abhängig von Signalen $S/R_{BED}$ durch die übergeordnete Steuerung HAS-ST gesetzt oder zurückgesetzt werden können.

Zur Steuerung der in Fig. 7 gezeigten ergänzenden Teile zur Trefferauswertesteuerung T-AUSW bedarf es daher nur einiger weniger Steuerbefehle der übergeordneten Steuerung HAS-ST.

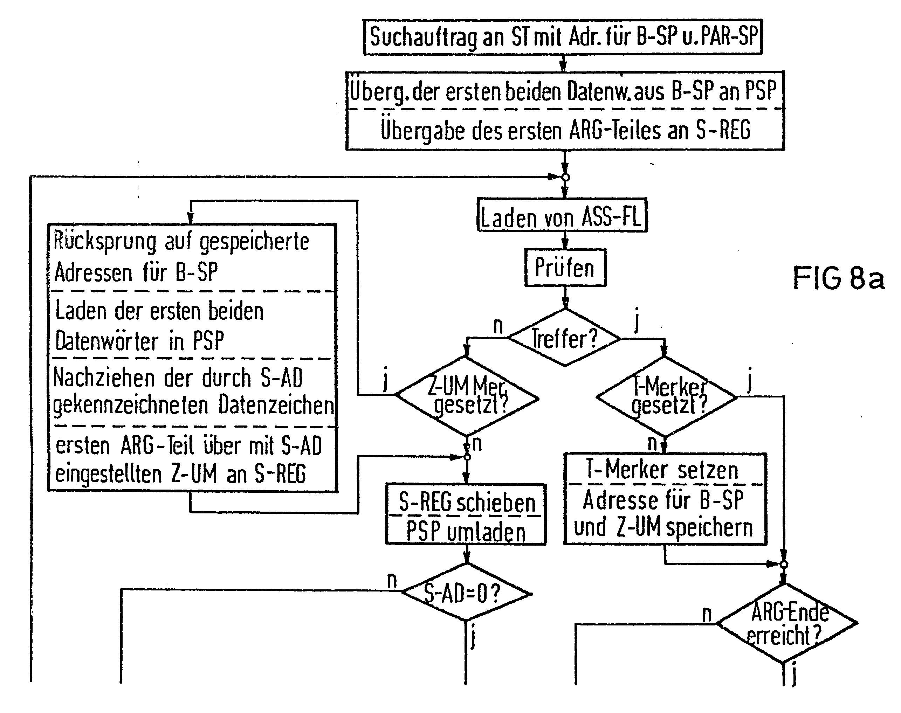

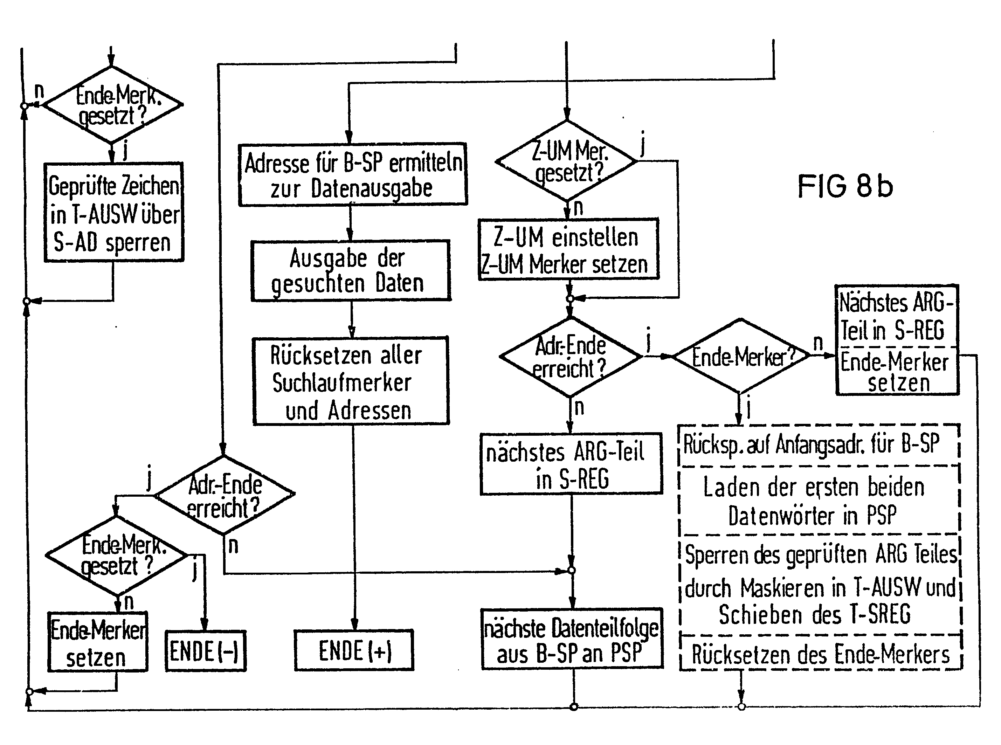

Damit ergibt sich für die Anordnung nach Fig. 2 und Fig. 5 die folgende, in Fig. 8A und B als Flussdiagramm dargestellte Arbeitsweise, wobei sich der gestrichelte Teil auf die zusätzliche Möglichkeit der Kettung von Subdatenfolgen beim Hybrid-Assoziativspeicher nach Fig. 5 bezieht.

Bevor der Suchvorgang gestartet werden kann, sind wenigstens die Startadressen für den Basisspeicher B-SP und den Parameterspeicher PAR-SP bereitzustellen. Anhand dieser Startadressen werden die beiden Speicher zu Beginn des Suchvorganges angesteuert und der erste Suchargumentteil aus dem Parameterspeicher PAR-SP an das Schieberegister S-REG sowie die ersten beiden Datenteilfolgen je Speichergruppe des Basisspeichers B-SP an den Pufferspeicher PSP übergeben, so dass im nachfolgenden Steuerschritt die Verknüpfungseinheiten ALV der assoziativen Oberfläche ASS-FL geladen werden können. Dann wird der bereitgestellte Assoziationsbefehl, z.B. «A-B» ausgeführt und von der Trefferauswertesteuerung T-AUSW überprüft, ob für eine der Datenteilfolgen wenigstens ein Treffer $T_{GES}$ vorliegt.

Solange kein solcher Treffer ermittelt wird, wird in aufeinanderfolgenden Prüfschritten dieser ersten Suchphase das im Schieberegister S-REG gespeicherte Suchargumentteil jeweils um einen Schritt zyklisch verschoben und das dadurch aus der Prüfung herausfallende Datenzeichen durch ein korrespondierendes aus der zweiten Stufe ST2 des Pufferspeichers PSP ersetzt. Wird nach jeweils erfolger Verschiebung festgestellt, dass im Schieberegister S-REG die Ausgangsstellung noch nicht wieder erreicht ist — S-AD = 0 bei zyklischem Zähler für die Schiebetakte —, dann wird mit Laden der Verknüpfungseinheiten ALV der assoziativen Oberfläche ASS-FL der bisher beschriebene Prüfzyklus wiederholt.

Erreicht das Schieberegister S-REG dabei wieder die Ausgangsstellung und das Ende der Datenfolge ist noch nicht erreicht, dann ist die erste Datenteilfolge je Speichergruppe ohne Erfolg überprüft, und es ist die jeweils nächste Datenteilfolge aus dem Basisspeicher B-SP an den Pufferspeicher PSP zu übergeben usw.

Der bisher geschilderte Prüfablauf entspricht dem Verschieben des Suchargumentteiles um jeweils einen Zeichenschritt gegenüber der zu prüfenden Datenfolge bzw. den gleichzeitig zu prüfenden Subdatenfolgen und er wird so lange fortgesetzt, bis entweder das Ende der Datenfolge erreicht ist und damit der Suchvorgang erfolglos abgebrochen oder aber ein erster Treffer erzielt wird.

Bei Übergabe der jeweils letzten Datenteilfolge an den Pufferspeicher PSP kann nach Erreichen der Schiebeausgangsstellung mit S-AD = 0 keine weitere Datenfolge aus dem Basisspeicher mehr nachgeladen werden, es ist aber die letzte Datenteilfolge aus der Stufe ST2 des Pufferspeichers PSP noch zu prüfen. Es wird daher ein Endemerker gesetzt und die Prüfung fortgesetzt. Da dabei aber auch kein Datenzeichen der ersten Stufe im Pufferspeicher mehr ersetzt werden kann, muss ausserdem die Trefferauswertung für die überprüften Datenzeichen in der Trefferauswertesteuerung T-AUSW gesperrt werden, indem — wie bereits beschrieben — Pseudotreffer gebildet werden. Erst wenn danach die Schiebeausgangsstellung wieder erreicht wird, kann folglich der Suchvorgang erfolglos abgebrochen werden.

Beim ersten erzielten Treffer wird diese Tatsache durch Setzen eines entsprechenden Treffermerkers festgehalten, in der Trefferauswertesteuerung T-AUSW auf Trefferkettung umgeschaltet und die zugehörige Adresse für den Basisspeicher B-SP und die Verschiebestellung des Schieberegisters S-REG in Form der Adresse S-AD gespeichert, damit der Speicheranfangspunkt für die gesuchten Daten nach deren Auffinden für die Ausgabe ermittelt bzw. bei Abbruch des Suchvorganges die neue Startadresse ermittelt werden kann. Anschliessend wird geprüft, ob das Ende des Suchargumentes erreicht ist und daher der eingeleitete Suchvorgang mit Ausgabe der gesuchten Daten erfolgreich beendet werden kann.

Ist das Ende des Suchargumentes noch nicht erreicht, dann wird beim ersten ermittelten Treffer der Zeichenumordner Z-UM für die Nachladung des Schieberegisters S-REG bei Aufrechterhaltung der erreichten zyklischen Verschiebung eingestellt und diese Tatsachen durch Setzen eines entsprechenden Merkers ebenfalls festgehalten. Solange das Adressenende noch nicht erreicht ist, wird nun zur Einleitung der zweiten Suchphase der nachfolgende Suchargumentteil in das Schieberegister S-REG und die nächte Datenteilfolge aus dem Basisspeicher B-SP in den Pufferspeicher PSP geladen, so dass anschliessend mit Laden der Verknüpfungseinheiten der assoziativen Oberfläche ASS-FL der nächste Prüfschritt eingeleitet werden kann. Mit jedem dabei erzielten nachfolgenden Treffer wird dann ein neuer Suchargumentteil und eine neue Datenteilfolge überprüft, bis das Ende des Suchargumentes erreicht wird und der Suchvorgang erfolgreich abgebrochen werden kann.

Reisst dagegen die Trefferkettung in der Trefferauswertesteuerung T-AUSW bei Überprüfung einer Datenfolge bzw. bei gleichzeitiger Überprüfung mehrerer Subdatenfolgen für alle Subdatenfolgen ab, weil kein Treffer bzw. überhaupt kein Treffer mehr erzielt wird, dann führt dies zum Abbruch des laufenden Suchvorganges und zur Einleitung eines neuen Suchvorganges mit gegenüber der vorhergehenden Startadresse für den Basisspeicher B-SP verschobener Startadresse.

Diese Entscheidung ergibt sich aus dem Zusammentreffen von gesetztem Merker für die Einstellung des Zeichenumordners Z-UM mit dem Ausbleiben eines Treffers. In diesem Falle wird auf die zwischengespeicherte Adresse für den Basisspeicher B-SP zu Beginn der zweiten Suchphase des abgebrochenen Suchvorganges zurückgesprungen, und es werden ausgehend von diesem neuen Suchanfang die jeweils ersten beiden Datenteilfolgen je Speichergruppe des Basisspeichers in den Pufferspeicher PSP geladen. Damit infolge vorangegangener Verschiebungen der Pufferspeicher PSP auch entsprechend umgeladen wird, werden des weiteren anhand der zwischengespeicherten Schiebeadresse S-AD alle durch diese Adresse erfassten Datenzeichen in der ersten Stufe ST1 des Pufferspeichers PSP durch korrespondierende Datenzeichen der zweiten Stufe ST2 ersetzt. Ausserdem wird wiederum der erste Suchargumentteil im Schieberegister S-REG bereitgestellt, wobei die durch die Schiebeadresse S-AD bewirkte Einstellung des Zeichenumordners Z-UM beim Laden zum Tragen kommt und damit der zu Beginn der zweiten Suchphase des abgebrochenen Suchvorganges gegebene Ausgangszustand wieder hergestellt ist.

Durch Rücksetzen aller Suchlaufmerker und nachfolgendes weiteres Verschieben des Suchargumentteiles im Schieberegister S-REG mit entsprechendem Umladen im Pufferspeicher PSP wird dann die infolge eines Treffers beendete erste Suchphase des vorangehend abgebrochenen Suchvorganges in der beschriebenen Weise mit einem um einen Zeichenschritt verschobenen Suchargument fortgesetzt, bis — wie bereits erläutert — der Suchvorgang erfolglos beendet ist oder aber ein Treffer wieder auf die zweite Suchphase überleitet.

Wird vor Abbruch der zweiten Suchphase das Adressenende erreicht und ist noch kein Endemerker gesetzt, dann ist — ähnlich wie bei der bereits erläuterten ersten Suchphase — noch die in der Stufe ST2 des Pufferspeichers PSP enthaltene Datenteilfolge bzw. deren Rest bei Verschiebung zu prüfen. Es wird daher der Rest des Suchargumentes oder bei Kettung von Subdatenfolgen der nachfolgende Suchargumentteil bereitgestellt und bei der Trefferauswertung die infolge der Verschiebung nicht zu berücksichtigenden Zeichentreffersignale wieder durch Pseudotreffer ersetzt. Ausserdem wird wieder der Endemerker gesetzt.

Besteht die zu überprüfende Datenmenge aus geketteten Subdatenfolgen, die in getrennten Speichergruppen des Basisspeichers B-SP entsprechend Fig. 5 und Fig. 6 untergebracht sind, dann ist ausserdem der im Flusslaufdiagramm von Fig. 8B gestrichelt enthaltene Teil des Verfahrensablaufes zu berücksichtigen, der allerdings nur wirksam werden kann, wenn die zweite Suchphase bereits eingeleitet ist, da während der ersten Suchphase die Kettung nicht zum Tragen kommen kann.

Dieser zusätzliche Verfahrensablauf wird eingeleitet, wenn bei einem auftreffenden Treffer das Adressenende bereits erreicht und der Endemerker gesetzt ist. Dann muss wie bei Beginn eines ersten Suchvorganges auf die Anfangsadresse für den Basisspeicher zurückgesprungen werden, und anschliessend werden wieder die jeweils ersten beiden Datenteilfolgen in dem Pufferspeicher PSP geladen. Das Suchargumentteil im Schieberegister S-REG bleibt dagegen unverändert. Damit jedoch die Prüfung auf den noch nicht geprüften Suchargumentteil beschränkt bleibt, werden für den nachfolgenden Prüfschritt die Treffersignale für die bereits geprüften Suchargumentzeichen durch Pseudotreffer ersetzt. Ausserdem werden die Trefferinhalte des aus den Kettungskippstufen gebildeten Schieberegisters T-SREG (Fig. 7) um einen Schritt verschoben, um die Trefferkettung aufrechtzuerhalten. Schliesslich wird der Endemerker zurückgesetzt und damit dieser Ablaufteil wieder gesperrt. Der weitere Verfahrensablauf entspricht dann den bereits erläuterten Ablaufvarianten.

Selbstverständlich können auf diese Weise bei längeren Suchargumenten auch mehr als zwei Subdatenfolgen gekettet werden.

Auch sind zahlreiche Abwandlungen bei der Durchführung der neuen Suchverfahren denkbar. So kann beispielsweise bei Verwendung von Verknüpfungseinheiten ALV für die assoziative Oberfläche ASS-FL entsprechend der älteren europäischen Patentanmeldung EP-A-0 126 896 (DE-A-3 319 581), die mit individuellen Treffersteuerungen ausgerüstet sind, auf die Nachbildung von Pseudotreffern in der Trefferauswertesteuerung T-AUSW gemäss Fig. 7 verzichtet werden, da diese Funktion von den jeweils betroffenen Verknüpfungseinheiten unmittelbar übernommen werden kann. Dagegen wird die Trefferkekttung auch in diesem Falle in der Trefferauswertesteuerung T-AUSW entsprechend Fig. 7 vorgenommen.

Auch ermöglicht die Verwendung eines entsprechend der älteren europäischen Patentanmeldung EP-A-0 123 169 (DE-A-3 311 665) ausgebildeten Basisspeichers die Durchführung von Suchverfahren sowohl mit vertikal als auch mit horizontal ausgerichteten Daten zu unterschiedlichen Zwecken mit ein und demselben Hybrid-Assoziativspeicher. Abhängig von der Art des Suchverfahrens ist dann lediglich sicherzustellen, dass die Daten aus dem Basisspeicher B-SP der assoziativen Oberfläche ASS-FL sowohl direkt als auch, wie im vorliegenden Falle, über den zweistufigen Pufferspeicher PSP zugeführt werden können.

Anschliessend sei noch angemerkt, dass bei den Suchverfahren gemäss der Erfindung, insbesondere bei der Überprüfung von Texten auf vorgegebene Wörter oder Wortgruppen, auch Trennzeichen zwischen den Wörtern in das Suchargument einzubeziehen sind, damit eine Unterscheidung verschiedener Wörter mit demselben Wortbestandbestandteil möglich ist. Sucht man z.B. das Wort «MAIER», dann dürfen andere Wörter, wie «MAIERING» oder «OBERMAIER», nicht zu einem Treffer führen.

## Patentansprüche

1. Verfahren zum Aufsuchen von einem vorgegebenen Suchargument entsprechenden Daten aus einer aus gleichgrossen kleinsten Einheiten als Vergleichseinheit, z.B. Zeichen oder Byte von acht Bit, in beliebiger Kombination zusammengesetzten Datenfolge, die zur Prüfung an eine assoziative Funktionen ausführende Verknüpfungsanordnung übergeben wird, wobei das Suchargument schrittweise jeweils um eine Einheit fortschreitend, von einem Ende der zu überprüfenden Datenfolge her beginnend so lange an dieser entlang verschoben wird, bis entweder die dem Suchargument entsprechenden Daten gefunden sind oder aber die gesamte Datenfolge geprüft ist, dadurch gekennzeichnet,

dass die zu überprüfende Datenfolge in gleichlange Datenteilfolgen (x, y, z) unterteilt ist und diese Datenteilfolgen nacheinander, aber für sich jeweils parallel über einen zweistufigen Pufferspeicher (PSP) der die Prüfung durchführenden Verknüpfungsanordnung (ASS-FL) zugeführt werden,

dass zu Beginn einer ersten Suchphase jeweils ein der Arbeitsbreite der Verknüpfungsanordnung (ASS-FL) entsprechendes Teil (ARG1) des Suchargumentes (ARG) zur Auswertung bereitgestellt wird und die Verknüpfungsanordnung (ASS-FL) in einem ersten Prüfschritt die in der ersten Stufe (ST1) des Pufferspeichers (PSP) enthaltene Datenteilfolge (z.B. x) überprüft,

dass jeweils bei Ausbleiben eines Treffers der bereitgestellte erste Teil (ARG1) des Suchargumentes (ARG) jeweils zyklisch um eine Einheit verschoben, mit jeder erfolgten Verschiebung jedes dadurch von der Prüfung ausgeschlossene Datenzeichen aus der ersten Stufe (ST1) des Pufferspeichers (PSP) durch ein korrespondierendes Datenzeichen aus der zweiten Stufe (ST2) des Pufferspeichers (PSP) ersetzt und die Prüfung wiederholt wird, bis sich ein Treffer ($T_{GES}$) ergibt und eine zweite Suchphase eingeleitet wird,

dass zu Beginn der zweiten und ggf. folgenden Suchphasen jeweils der anschliessende Teil (z.B. ARG2) des Suchargumentes (ARG) unter Aufrechterhaltung der am Ende der ersten Suchphase erreichten Verschiebung mit der jeweils durch Nachladen des Pufferspeichers (PSP) erhaltenen und in der ersten Stufe (ST1) des Pufferspeichers (PSP) bereitstehenden Datenzeichenfolge (x/ya) zur Prüfung gelangt, bis das gesamte Suchargument (ARG) abgearbeitet ist,

dass dagegen bei Ausbleiben eines Treffers während einer der auf die erste folgenden Suchphasen der Suchvorgang abgebrochen und mit Einleiten einer neuen ersten Suchphase wieder begonnen wird und

dass mit jedem erneuten Einleiten der ersten Suchphase im Rahmen eines Suchvorganges der bereitgestellte erste Teil (z.B. ARG1) des Suchargumentes (ARG) aus der jeweils zuletzt erreichten Verschiebestellung heraus um eine Einheit verschoben wird und die Prüfung von der am Ende der ersten Suchphase des vorangehenden abgebrochenen Suchvorganges massgebenden Datenteilfolge aus fortgesetzt wird, wobei infolge der Verschiebung des Suchargumentes aus der Prüfung herausgefallene Datenzeichen in der ersten Stufe (ST1) des Pufferspeichers (PSP) wieder durch korrespondierende Datenzeichen aus der zweiten Stufe (ST2) des Pufferspeichers (PSP) ersetzt werden.

2. Verfahren nach Anspruch 1, dadurch gekennzeichnet, dass bei jeweils gleichzeitiger Überprüfung von getrennten Datenfolgen oder eine Datenfolge bildenden Subdatenfolgen anhand jeweils desselben Suchargumentes (ARG) der jeweils eingeleitete Suchvorgang nach Übergang in die zweite Suchphase erst dann abgebrochen wird, wenn für keine der gleichzeitig überprüften Daten- oder Subdatenfolgen ein verwertbarer Treffer ($T_{GES}$) mehr angezeigt wird.

3. Verfahren nach Anspruch 2, dadurch gekennzeichnet, dass bei miteinander geketteten Subdatenfolgen jeweils mit Erreichen des Endes der Subdatenfolgen bei über das Ende der Subdatenfolgen hinausgehendem Suchargument die Prüfung in zyklischer Folge mit den Anfängen der Subdatenfolgen fortgesetzt wird, dass jeweils bei der Prüfung der letzten Datenteilfolge einer Subdatenfolge der infolge einer Verschiebung das Zeilenende überschreitende Rest des jeweiligen Suchargumentteiles (z.B. ARG1) von der Prüfung ausgenommen wird und allein dieser Rest ohne Änderung des Suchargumentteiles für die nachfolgende Prüfung der ersten Datenteilfolgen der Subdatenfolgen verwendet wird und dass die jeweils bis zum Ende einer Subdatenfolge gewonnenen Treffer mit den nachfolgenden Treffern für die zylklisch nachfolgende Subdatenfolge gekettet werden.

4. Anordnung zur Durchführung des Verfahrens nach Anspruch 1, gekennzeichnet

durch eine assoziative Funktionen je Datenzeichen ausführende Verknüpfungsanordnung (ASS-FL) mit einer die Treffer je Datenzeichen auswertenden Trefferauswertesteuerung (T-AUSW) und mit einem zweistufigen Pufferspeicher (PSP) zur Aufnahme zweiter Datenteilfolgen, wobei Datenzeichen in der ersten Stufe (ST1) gegen korrespondierende Datenzeichen in der zweiten Stufe (ST2) zeichenweise steuerbar austauschbar sind und Datenzeichen aus der zweiten Stufe (ST2) selbsttätig in die erste Stufe (ST1) beim Nachladen des Pufferspeichers (PSP) mit einer Datenteilfolge weitergeleitet werden, wenn Zeichenabschnitte der ersten Stufe (ST1) frei sind,

durch ein zyklisch arbeitendes Schieberegister (S-REG) mit Einrichtungen (z.B. Zeichenumordner Z-UM) zur zyklischen Vertauschung der Suchargumentzeichen des jeweils benötigten Suchargumentteiles (z.B. ARG1) entsprechend der vom Schieberegister (S-REG) vorher eingenommenen Schiebestellung und

durch eine Steuereinrichtung (ST bzw. HAS-ST) zur Erzeugung der benötigten Steuersignale (z.B. S-CL, S-AD, N-CL) für das Einstellen des Schieberegisters (S-REG) und der Einrichtungen zur zyklischen Vertauschung der Suchargumentzeichen (z.B. Zeichenumordner Z-UM) sowie für das Laden und Umladen des Pufferspeichers (PSP) abhängig von Treffersignalen (T$_{GES}$) der Trefferauswertesteuerung (T-AUSW).

5. Anordnung nach Anspruch 4 zur Durchführung der Verfahren nach Anspruch 2 oder 3, gekennzeichnet

durch mehrere parallel arbeitende Verknüpfungsanordnungen zur Ausführung assoziativer Funktionen mit jeweils nachgeschaltetem zweistufigen Pufferspeicher, die alle parallel ladbar und steuerbar sind, so dass gleichzeitig mehrere Datenteilfolgen getrennter Datenfolgen bzw. verschiedener Subdatenfolgen derselben Datenfolge bereitgestellt und überprüft werden können,

durch eine mit allen Verknüpfungsanordnungen gekoppelte und diese gleichzeitig überwachende Trefferauswertesteuerung (T-AUSW) und

durch Einrichtungen (z.B. M-REG, OD0 bis OD15) zur Nachbildung von zeichenindividuellen Pseudotreffersignalen für von der Prüfung auszuschliessende Datenzeichen für die Trefferauswertesteuerung (T-AUSW).

6. Anordnung nach Anspruch 5 zur Durchführung des Verfahrens nach Anspruch 3, dadurch gekennzeichnet,

dass in der Trefferauswertesteuerung (T-AUSW) je Verknüpfungsanordnung wenigstens eine Kippstufe zur Kettung von Treffern aufeinanderfolgender Prüfungen und Steuereinrichtungen zur zyklisch verschobenen Kopplung der in den einzelnen Kippstufen gespeicherten Trefferaussagen mit den Trefferleitungen benachbarter Verknüpfungsanordnungen beim Übergang von einer geketteten Subdatenfolge auf die nachfolgende vorgesehen sind und

dass mit der Steuereinrichtung Speichereinrichtungen (K-Z) zur Kennzeichnung des Ausmasses der zyklisch verschobenen Kopplung für die Ermittlung der Speicheranfangsadresse für die am Schluss eines Suchvorganges aufgefundenen Daten gekoppelt ist.

7. Anordnung nach Anspruch 6, dadurch gekennzeichnet, dass die Kippstufen zur Trefferkettung ein Schieberegister (T-SREG) bilden, in dem die in den einzelnen Kippstufen gespeicherten Trefferaussagen zur zyklisch verschobenen Kopplung mit den Trefferleitungen der einzelnen Verknüpfungsanordnungen schrittweise verschiebbar sind.

8. Anordnung nach einem der Ansprüche 4 bis 7, gekennzeichnet

durch einen Hybrid-Assoziativspeicher mit einer je zu prüfendem Datenzeichen aus einer Verknüpfungseinheit (ALV) bestehenden assoziativen Oberfläche (ASS-FL) als Verknüpfungsanordnung, mit einem normalen Zugriffsspeicher als Basisspeicher (B-SP), der die einzelnen Datenteilfolgen zeilenweise adressierbar vertikal untereinander gespeichert enthält, und mit einer Ablaufsteuerung (HAS-ST) zur Durchführung der Suchprozedur und zur Bereitstellung der jeweils benötigten Parameter (z.B. ARG) und Steuersignale (CMD).

**Claims**

1. A method of finding data specified by a given search argument from a data sequence in an arbitrary combination composed of equal value, standard units for comparison, e.g. characters or bytes consisting of eight bits, which sequence is transferred for checking purpose to a logic-linking arrangement which forms associative functions and the search argument is shifted anlog the data sequence to be checked, commencing from one end thereof and advancing in stepped fashion, in each case by one unit, until either the data specified by the search argument has been found or the entire data sequence has been checked, characterised in that:

the data sequence to be checked is sub-divided into data sub-sequences (x, y, z) of equal length and these data sub-sequences are fed consecutively but in each case in parallel via a two-stage buffer store (PSP) to the logic-linking arrangement (ASS-FL) which performs the checking procedure;

that at the beginning of a first search phase a part (ARG1), corresponding to the operating breadth of the logic-linking arrangement (ASS-FL) of the search argument (ARG) is made available for analysis and in a first checking step the logic-linking arrangement (ASS-FL) checks the data sub-sequence (e.g. x) contained in the first stage (ST1) of the buffer store (PSP);

that in each case of non-identity the first part (ARG1), of the search argument (ARG) made available is cyclically shifted by one unit, and with each shift each data character, thereby excluded from the checking procedure, from the first stage (ST1) of the buffer store (PSP) is replaced by a corresponding data character from the second stage (ST2) of the buffer store (PSP) and the checking procedure is repeated until a matching co-incidence ($T_{GES}$) occurs and a second search phase is initiated;

that at the beginning of the second and any following search phases, whilst maintaining the shift which occurred at the end of the first search phase, the next part (e.g. ARG2) of the search argument (ARG) is checked with the data character sequence (x/ya) obtained as a result of reloading the buffer store (PSP) and is available in the first stage (ST1) of the buffer store (PSP), until the entire search argument ARG has been processed;

that, in contrast, if there is no matching co-incidence during one of the search phases which follows the first search phase, the search procedure is interrupted and a new first search phase is reinitiated; and

that whenever the first search phase is reinitiated during a search procedure, the first part (e.g. ARG1) of the search argument (ARG) which has been made available, is shiftes by one unit from the last reached shift position and the checking is continued from the data sub-sequence which prevailed at the end of the first search phase of the preceding, interrupted search procedure, where data characters from the first stage (ST1) of the buffer store (PSP), which have been excluded from the checking procedure as a result of the shifting of the search argument, are again replaced by corresponding data characters from the second stage (ST2) of the buffer store (PSP).

2. A method as claimed in Claim 1, characterised in that when separate data sequences or sub-data sequences which form a data sequence are checked simultaneously using the same search argument (ARG), when the second search phase has been entered the particular search procedure which has been initiated is not interrupted unless no matching co-incidence constituting a utilisable hit ($T_{GES}$) is indicated for any of the simultaneously checked data sequences or sub-data sequences.

3. A method as claimed in Claim 2, characterised in that when sub-data sequences are chain-linked to one another, when the end of the sub-data sequence is reached and a search argument extends beyond the end of the sub-data sequence, the checking procedure is continued in a cyclic sequence with the starts of the sub-data sequences, that in the checking of the last data-sub-sequence of a sub-data sequence, the remainder of the search argument section in question (e.g. ARG1) which overshoots the end of the line as a result of the shift process is excluded from the checking procedure, and this remainder alone is used for the subsequent checking of the first data sub-sequences of the sub-data sequences without changing the search argument section, and that the hits which have been obtained by the end of a sub-data sequence are chain-linked to the following hits for the cyclically following sub-data sequence.

4. An arrangement for the implementation of the method claimed in Claim 1, characterised:

by a logic-linking arrangement (ASS-FL) which performs associative functions in respect of each data character, a hit analysis control unit (T-AUSW) which analyses the hits in respect of each data character, and a two-stage buffer store (PSP) to accommodate second data sub-sequences, in which data characters in the first stage (ST1) can be exchanged character-by-character with corresponding data characters in the second stage (ST2) in controlled fashion, and data characters from the second stage (ST2) are automatically transferred to the first stage (ST1) during reloading the buffer store (PSP) with a data sub-sequence when character sections of the first stage (ST1) are free;

by a cyclically operating shift register (S-REG) comprising devices (e.g. character reclassifier Z-UM) for the cyclic exchange of search argument characters of the required search argument section (e.g. ARG1) in accordance with the shift position previously assumed by the shift register (S-REG); and

by a control device (ST and HAS-ST) which generates the control signals (e.g. S-CL, S-AD, N-CL) required for setting the shift register (S-REG) and the devices for the cyclic exchange of the search argument characters (e.g. the character reclassifier Z-UM), and for loading and reloading the buffer store (PSP) in dependence upon hit signals ($T_{GES}$) from the hit analysis control unit (T-AUSW).

5. An arrangement as claimed in Claim 4 for the implementation of the method as claimed in Claim 2 or 3, characterised:

by a plurality of parallel operating logic-linking arrangements which perform associative functions and each of which are followed by two-stage buffer stores, all of which ban be loaded and controlled in parallel so that a plurality of data sub-sequences of separate data sequences or different sub-data sequences of the same data sequence can be made available and checked simultaneously;

by a hit analysis control unit (T-AUSW) coupled to all the logic-linking arrangements which it monitors simultaneously; and

by devices (e.g. M-REG, OD0 to OD15) which simulate character-individual pseudo-hit signals for the exclusion from the checking procedure of data characters for the hit analysis control unit (T-AUSW).

6. An arrangement as claimed in Claim 5 for the implementation of the method claimed in Claim 3, characterised in that:

for each logic-linking arrangement the hit analysis control unit (T-AUSW) contains at least one flip-flop for the chain linking of hits of consecutive checking procedures and control devices for coupling the hit statements stored in the individual flip-flops, with a cyclic shift, to the hit lines of adjacent logic-linking arrangements when a transition is made from one chain-linked sub-data sequence to the next; and

the control device is coupled to storage devices (K-Z) which characterise the extent of the cyclically-shifted coupling in order to determine the store start address for the data items which have been found at the end of a search procedure.

7. An arrangement as claimed in Claim 6, characterised in that for the hit chain-linking, the flip-flop form a shift register (T-SREG) in which the hit statements stored in the individual flip-flops can be shifted step-by-step for cyclically shifted coupling with the hit lines of the individual logic-linking arrangements.

8. An arrangement as claimed in one of Claims 4 to 7, characterised by a hybrid associative store which has an associative surface (ASS-FL) which consists of one logic-linking unit (ALV) for each data character to be checked, and which serves as logic-linking arrangement, which comprises a normal access store as a base store (B-SP) which stores the individual data sub-sequences vertically one below another, so as to be able to be addressed row-by-row, and which comprises a flow control unit (HAS-ST) which carries out the search procedure and makes available the required parameters (e.g. ARG) and control signals (CMD).

**Revendications**

1. Procédé pour rechercher des données, correspondant à un argument de recherche prédéterminé, dans une suite de données composés d'une combinaison quelconque d'unités les plus petites possibles et d'égale grandeur, correspondant à l'unité de comparaison, par exemple de caractères ou de bytes de huit bits chacun, suite de données qui est transférée, à des fins de contrôle, à un dispositif de mise en relation exécutant des fonctions associatives, procédé dans lequel l'argument de recherche, avançant pas à pas d'une unité à chaque fois, est décalé le long de la suite de données à contrôler, à commencer par une extrémité de celle-ci, jusqu'à ce que, soit les données correspondant à l'argument de recherche aient été trouvées, soit toute la suite de données ait été contrôlée, caractérisé en ce

que la suite de données à contrôler est divisée en suites partielles (x, y, z) de même longueur et ces suites partielles de données sont amenées successivement, mais en parallèle pour chacune d'elles, à travers une mémoire tampon (PSP) à deux étages, au dispositif de mise en relation (ASS-FL) effectuant le contrôle,

qu'au début d'une première phase de recherche, une partie (ARG1) de l'argument de recherche (ARG), correspondant à la largeur de travail du dispositif de mise en relation (ASS-FL), est présentée pour l'exploitation et le dispositif de mise en relation (ASS-FL), dans un premier pas de contrôle, contrôle la suite partielle de données (x, par exemple) contenue dans le premier étage (ST1) de la mémoire tampon (PSP),

que la première partie présentée (ARG1) de l'argument de recherche (ARG), s'il ne se produit pas de correspondance, est décalée cycliquement d'une unité chaque fois, chaque caractère d'information du premier étage (ST1) de la mémoire tampon (PSP), ainsi exclu du contrôle à chaque décalage produit, est remplacé par un caractère d'information correspondant du second étage (ST2) de la mémoire tampon (PSP) et le contrôle est répété jusqu'à ce qu'il se produise une correspondance ($T_{GES}$) et qu'une deuxième phase de recherche soit déclenchée,

qu'au début de la deuxième phase de recherche et, éventuellement, des phases de recherche suivantes, avec maintien du décalage obtenu à la fin de la première phase de recherche, la partie consécutive (ARG2 par exemple) de l'argument de recherche est amenée au contrôle de la suite de caractères d'information (x/ya) obtenue par la recharge de la mémoire tampon (PSP) et présentée dans le premier étage (ST1) de la mémoire tampon (PSP), jusqu'à ce que tout l'argument de recherche (ARG) ait été traité,

que l'opération de recherche, s'il ne se produit pas de correspondance pendant les phases de recherche faisant suite à la première, est au contraire arrêtée et recommencée par le déclenchement d'une nouvelle première phase de recherche et

qu'à chaque nouveau déclenchement de la première phase de recherche dans le cadre d'une opération de recherche, la première partie présentée (ARG1 par exemple) de l'argument de recherche (ARG) est décalée d'une unité, depuis la position de décalage atteinte en dernier, et le contrôle est poursuivi à partir de la suite partielle de données déterminante à la fin de la première phase de recherche de l'opération de recherche précédente, tronquée, avec remplacement, dans le premier étage (ST1) de la mémoire tampon (PSP), des caractères d'information éliminés du contrôle par suite du décalage de l'argument de recherche, par des caractères d'information correspondants du second étage (ST2) de la mémoire tampon (PSP).

2. Procédé selon la revendication 1, caractérisé en ce que, lors du contrôle simultané de suites de données séparées ou de sous-suites de données formant une suite de données, d'après le même argument de recherche (ARG1), l'opération de recherche déclenchée, après passage à la deuxième phase de recherche, est arrêtée seulement lorsqu'il n'y a plus d'indication d'une correspondance exploitable ($T_{GES}$) pour aucune des suites ou sous-suites de données contrôlees simultanément.

3. Procédé selon la revendication 2, caractérisé en ce que, dans le cas de sous-suites de données mutuellement enchaînées, lorsque la fin des sous-suites de données est atteinte alors que l'argument de recherche va au-delà de la fin des sous-suites de données, le contrôle est poursuivi, dans une succession cyclique, avec les débuts des sous-suites de données, qu'à chaque contrôle de la dernière suite partielle de données d'une sous-suite de données, le reste de la partie concernée de l'argument de recherche (ARG1 par exemple), débordant la fin de ligne par suite d'un décalage, est retiré du contrôle et ce seul reste, sans changement de la partie de l'argument de recherche est utilisé pour le contrôle consécutif des premières suites partielles de données des sous-suites de données et que les correspondances obtenues chaque fois jusqu'à la fin d'une sous-suite de données sont chaînées avec les correspondances suivantes pour la sous-suite de données cycliquement suivante.

4. Dispositif pour la mise en oeuvre du procédé selon la revendication 1, caractérisé

par un dispositif de mise en relation (ASS-FL), effectuant des fonctions associatives par caractère d'information, avec une commande d'exploitation de correspondances (T-AUSW), exploitant les correspondances par caractère d'information, et avec une mémoire tampon (PSP) à deux étages, destinée à recevoir des deuxièmes suites partielles de données, des caractères d'information contenus dans le premier étage (ST1) pouvant être remplacés, sous une commande caractère par caractère, par des caractères d'information correspondants contenus dans le second étage (ST2), et des caractères d'information du second étage (ST2), pouvant être transmis automatiquement dans le premier étage (ST1) lors du rechargement de la mémoire tampon (PSP) avec une suite partielle de données, lorsque des tronçons de caractères du premier étage (ST1) sont libres,

par un registre à décalage (S-REG), travaillant cycliquement, avec des dispositifs (par exemple un répositionneur de caractères Z-UM) pour l'interversion cyclique des caractères d'argument de recherche de la partie chaque fois nécessaire de l'argument de recherche (ARG1 par exemple), conformément à la position de décalage occupée précédemment par le registre à décalage (S-REG) et

par un dispositif de commande (ST respectivement HAS-ST) pour générer les signaux de commande nécessaires (par exemple S-CL, S-AD, N-CL) pour le réglage du registre à décalage (S-REG) et des dispositifs pour l'interversion cyclique des caractères d'argument de recherche (par exemple du répositionneur de caractères Z-UM) ainsi pour le chargement et le rechargement de la mémoire tampon (PSP) en fonction de signaux de correspondance ($T_{GES}$) de la commande d'exploitation de correspondances (T-AUSW).

5. Dispositif selon la revendication 4 pour la mise en oeuvre des procédés selon la revendication 2 ou 2, caractérisé

par plusieurs dispositifs de mise en relation, travaillant en parallèle, en vue de l'execution de fonctions associatives, dispositifs qui sont suivis de mémoires tampon à deux étages, qui peuvent toutes être chargées et commandées en parallèle, de sorte que plusieurs suites partielles de données de suites de données séparées, ou différentes sous-suites de données de la même suite de données peuvent être mises à disposition et contrôlées simultanément,

par une commande d'exploitation de correspondances (T-AUSW) qui est couplée à tous les dispositifs de mise en relation et qui les surveille en même temps et

par des dispositifs (par exemple M-REG, OD0 à OD15) pour la réproduction de signaux, coordonnés individuellement aux caractères, de pseudo-correspondance, pour les caractères d'information, destinées à la commande d'exploitation de correspondances (T-AUSW), qui sont à exclure du contrôle.

6. Dispositif selon la revendication 5 pour la mise en oeuvre du procédé selon la revendication 3, caractérisé

en ce que la commande d'exploitation de correspondances (T-AUSW) comporte, par dispositif de mise en relation, au moins un étage basculeur pour le chaînage de correspondances de contrôles successifs, de même que des dispositifs de commande pour le couplage, décalé cycliquement, des informations de correspondance mémorisées dans les différents étages basculeurs, avec les lignes à correspondances de dispositifs de mise en relation voisins lors du passage d'une sous-suite de données enchaînée à la suivante et

que des dispositifs de mémorisation (K-Z) sont couplés au dispositif de commande pour caractériser l'étendue du couplage cycliquement décalé en vue de la détermination de l'adresse de début de mémoire pour les données trouvées à la fin d'une opération de recherche.

7. Dispositif selon la revendication 6, caractérisé en ce que les étages basculeurs servant à l'enchaînement des correspondances forment un registre à décalage (T-SREG) dans lequel les informations de correspondance, mémoirisées dans les différents étages basculeurs, peuvent être décalées pas à pas en vue du couplage cycliquement décalé avec les lignes à correspondances des différents dispositifs de mise en relation.

8. Dispositif selon une des revendications 4 à 7, caractérisé par une mémoire associative avec, pour chaque caractère d'information à contrôler, en tant que dispositif de mise en relation, une surface associative (ASS-FL), consistant en une unité de mise en relation (ALV), avec une mémoire normale à accès aléatoire en tant que mémoire de base (B-SP), laquelle contient les différentes suites partielles de données verticalement les unes au-dessous des autres, avec possibilité d'adressage ligne par ligne, et avec une commande de déroulement (HAS-ST) pour l'exécution de la procédure de recherche et pour la mise à disposition des paramètres (par exemple ARG) et des signaux de commande (CMD) chaque fois nécessaires.

## FIG 1A

| ARG 2 | S | F | L | U | E_ | G | E | L | PAR-SP |
|---|---|---|---|---|---|---|---|---|---|

Z-UM

| ARG 1 | R | O | T | A | T | I | O | N | S-REG |
|---|---|---|---|---|---|---|---|---|---|

S-AD

SZ (ST)

| | | | | | | | | | ASS-FL |
|---|---|---|---|---|---|---|---|---|---|

| x | * | * | * | * | R | O | T | A | ST1 | PSP |
|---|---|---|---|---|---|---|---|---|---|---|
| y | T | I | O | N | S | F | L | U | ST2 | |

| z | E | G | E | L | * | * | * | * | B-SP |
|---|---|---|---|---|---|---|---|---|---|

| ARG 2 | S | F | L | U | E | G | F | L | PAR-SP |
|---|---|---|---|---|---|---|---|---|---|

Z-UM

| | T | I | O | N | R | O | T | A | S-REG |
|---|---|---|---|---|---|---|---|---|---|
| ARG1 | | | | | | | | | |

S-AD

## FIG 1B

SZ (ST)

| | | | | | | | | | ASS-FL |
|---|---|---|---|---|---|---|---|---|---|

| x/ya | T | I | O | N | R | O | T | A | ST1 | PSP |
|---|---|---|---|---|---|---|---|---|---|---|
| yb | | | | | S | F | L | U | ST2 | |

| z | E | G | E | L | * | * | * | * | B-SP |
|---|---|---|---|---|---|---|---|---|---|

FIG 2

0 139 816

**FIG 3**

**FIG 4**

17

# FIG 5

FIG 6

PAR-SP
Z-UM
S-REG

ASS-FL/PSP

B-SP

ARG 2

ARG 1

$AD_A$

$AD_E$

MD5

MD4

# FIG 7

FIG 8a

Suchauftrag an ST mit Adr. für B-SP u. PAR-SP

Überg. der ersten beiden Datenw. aus B-SP an PSP

Übergabe des ersten ARG-Teiles an S-REG

Laden von ASS-FL

Prüfen

Treffer?   n   j

Z-UM Mer. gesetzt?   j   n

T-Merker gesetzt?   n   j

Rücksprung auf gespeicherte Adressen für B-SP

Laden der ersten beiden Datenwörter in PSP

Nachziehen der durch S-AD gekennzeichneten Datenzeichen

ersten ARG-Teil über mit S-AD eingestellten Z-UM an S-REG

S-REG schieben

PSP umladen

T-Merker setzen

Adresse für B-SP und Z-UM speichern

S-AD=0?   n   j

ARG-Ende erreicht?   n   j

0 139 816

FIG 8b

0 139 816